# EUROPÄISCHE PATENTSCHRIFT

(11) **EP 3 984 897 B1**
(45) Veröffentlichungstag und Bekanntmachung des Hinweises auf die Patenterteilung: **30.10.2024**
(21) Anmeldenummer: 21201120.9
(22) Anmeldetag: 06.10.2021
(51) Int. Cl.: B65B 27/04, B65D 71/02

(54) **VERPACKUNGSEINHEIT UND VERFAHREN ZUR HERSTELLUNG EINER VERPACKUNGSEINHEIT**
PACKAGING UNIT AND METHOD FOR PRODUCING A PACKAGING UNIT
UNITÉ D'EMBALLAGE ET PROCÉDÉ DE FABRICATION D'UNE UNITÉ D'EMBALLAGE

(30) Priorität: 16.10.2020 DE 102020213100
(43) Veröffentlichungstag der Anmeldung: 20.04.2022
(60) Teilanmeldung: 24201280.5
(73) Patentinhaber: Krones Aktiengesellschaft, 93073 Neutraubling (DE)
(72) Erfinder: SCHMID, Sebastian, 93073 Neutraubling (DE); KREIS, Marcus, 93073 Neutraubling (DE)
(74) Vertreter: Benninger, Johannes

(56) Entgegenhaltungen:
- EP-A1- 2 149 506
- DE-A1- 102009 025 824

## Beschreibung

Die vorliegende Erfindung betrifft eine Verpackungseinheit, und ein Verfahren zur Herstellung einer Verpackungseinheit.

Für die Verarbeitung, Zusammenstellung, Gruppierung und Verpackung von Artikeln wie bspw. Getränkebehältern gibt es unterschiedliche Verpackungsarten, bspw. die Zusammenfassung der Artikel bzw. Behälter zu tragbaren, relativ handlichen Verpackungseinheiten oder Gebindeeinheiten. So werden bspw. Getränkebehälter meist mittels Schrumpffolien zu Gebinden von vier, sechs oder mehr Behältern zusammengefasst und verpackt. Die Herstellung von Gebinden ist meist unumgänglich, da sie die häufigste Variante von Verkaufseinheiten für Getränkebehälter oder Flaschen aus PET-Kunststoff darstellen. Die Gebinde werden für den Transport teilweise nochmals zusammengefasst und/oder in Lagen zusammengestellt und palettiert.

Bei der Herstellung von bekannten Gebindearten sind spezifische Fertigungsschritte erforderlich, um die üblicherweise eingesetzten Schrumpffolien verarbeiten zu können. Diese Fertigungsschritte erfordern einen relativ hohen Energieeinsatz. Zudem verursacht die verwendete Folie Kosten zur Herstellung, zur Bereitstellung, zur Handhabung sowie zur späteren Entsorgung, da sie nach dem Verkauf nicht mehr benötigt wird. Auch die Maschinenausstattung zur Bereitstellung der sog. Folieneinschlagmodule und anderer Handhabungsstationen verursacht hohe Investitionskosten. Schließlich erfordert auch die Bereitstellung des sog. Schrumpftunnels, bei dem die um die Gebinde geschlagene Folie mittels Heißluftbeaufschlagung um die Behälter geschrumpft wird, einen relativ hohen Kapitaleinsatz.

Eine Variante, bei der grundsätzlich auf den Einsatz von Schrumpffolien verzichtet werden kann, sind sog. Umreifungsgebinde. Hierbei werden die Behälter mittels sog. Umreifungsbänder zu einem Gebinde zusammengefasst und miteinander verbunden. Die DE102009025824A1 zeigt ein solches Gebinde mit den Merkmalen des Oberbegriffs von Anspruch 1. In kontinuierlich oder taktweise arbeitenden Umreifungsmaschinen werden Behälter, Artikel oder Flaschen zu Formationen gruppiert und dann mit Hilfe von Umreifungsaggregaten mit einem Band oder mit mehreren Bändern umreift. Typische Formationen können bspw. 1 x 2-Anordnungen (zwei Behälter in Reihe), 2 x 2-Anordnungen (vier Behälter im Quadrat oder in Rautenformation), 3 x 2-, 4 x 3- oder grundsätzlich auch variable n x m-Anordnungen sein.

Die hierbei verwendeten Umreifungsbänder bestehen insbesondere aus Kunststoff, um den Verpackungseinheiten die notwendige Stabilität zu geben. Es ist jedoch auch die Verwendung von Papierbändern bekannt. Hierbei ergeben sich jedoch Probleme fehlender Materialstabilität ergeben. Dehnen sich die mit dem Umreifungsband zusammengefassten Artikel beispielsweise aufgrund von Erwärmung o.ä. aus, dann reißt die aus einem Papiermaterial gebildete Umreifung häufig auf. Alternativ besteht die Gefahr, dass die Artikel durch besonders steife Umreifungsbänder an der Ausdehnung gehindert und dadurch beschädigt werden.

Die Aufgabe der Erfindung besteht darin, eine kostengünstige und umweltschonende Möglichkeit zum Zusammenfassen von Artikeln in Verpackungseinheiten bereitzustellen.

Die obige Aufgabe wird durch eine Verpackungseinheit, und ein Verfahren zur Herstellung einer Verpackungseinheit gelöst, die die Merkmale in den unabhängigen Patentansprüchen umfassen. Weitere vorteilhafte Ausgestaltungen werden durch die Unteransprüche beschrieben.

Eine Verpackungseinheit umfasst mindestens einen Artikel, eine Zusammenstellung von mindestens zwei Artikeln, welche mindestens zwei Artikel vermittels mindestens einer bandförmigen Umreifung oder einem Umreifungsband aus einem aus einem Verpackungsmaterial zusammengefasst sind, welches Verpackungsmaterial Papierfasern umfasst. Die Begriffe bandförmigen Umreifung und Umreifungsband werden nachfolgend synonym verwendet.

Die bandförmige Umreifung weist eine Längserstreckungsrichtung auf, welche einer Ausrichtung der Umreifung senkrecht zu einer Längsachse der Artikel entspricht. Hierbei ist vorgesehen, dass ein wesentlicher Anteil der in der Umreifung enthaltenen Papierfasern in einem Winkel zur Längserstreckungsrichtung der Umreifung angeordnet ist, der einer senkrechten Richtung entspricht. Insbesondere kann bei der Erfindung vorgesehen sein, dass ein Anteil von mindestens 80 % der in der Umreifung enthaltenen Papierfasern in einem Winkel zwischen ca. 75° und 105° zur Längserstreckungsrichtung der Umreifung angeordnet ist.

Gemäß einer bevorzugten Ausführungsform ist vorgesehen, dass es sich bei dem Verpackungsmaterial um ein reines Papiermaterial handelt.

Bei den Artikeln handelt es sich vorzugsweise um Getränkebehälter, insbesondere Flaschen aus PET oder einem anderen geeigneten Kunststoff oder Dosen aus Kunststoff und/oder Aluminium o.ä. Die Verpackungsvorrichtung ist jedoch auch geeignet, andere geeignete Artikel in einer entsprechenden Umverpackung als Verpackungseinheiten oder Gebinde zusammenzufassen. Zur Herstellung der Verpackungseinheiten können mindestens zwei identisch ausgebildete Artikel als Artikelgruppe bereitgestellt werden. Durch Zusammenstellung von unterschiedlich ausgebildeten Artikeln können sogenannte Mischgebinde erzeugt werden. Besonders bevorzugt umfasst die Verpackungseinheit mindestens zwei Getränkebehälter, insbesondere Flaschen oder Dosen, die vorzugsweise von mindestens einer aus reinen Papiermaterial gebildeten Umreifung oder einem Umreifungsband zusammengefasst werden.

Gemäß einer bevorzugten Ausführungsform ist vorgesehen, dass ein Anteil von mindestens 80 % der in der Umreifung enthaltenen Papierfasern in einer orthogonalen Anordnung zur Längserstreckungsrichtung der Umreifung angeordnet ist, d.h. dass mindestens 80 % der in der Umreifung enthaltenen Papierfasern in einer orthogonalen Anordnung zur Längserstreckungsrichtung der Umreifung angeordnet sind.

Besonders bevorzugt sind im Wesentlichen alle Papierfasern der Umreifung parallel zueinander und insbesondere orthogonal zur Längserstreckungsrichtung der Umreifung angeordnet. Dadurch ergibt sich, dass nach Anordnung der Umreifung an den Artikeln die jeweils einer orthogonalen Anordnung zur Längserstreckungsrichtung der Umreifung angeordneten Papierfasern insbesondere parallel zu den Längsachsen der Artikel ausgerichtet sind.

Zur Herstellung der Verpackungseinheit wird ein Umreifungsband vorzugsweise unter Aufbringen einer Vorspannung um die Außenseiten der Artikel gespannt und an seinen Enden verbunden. Um bei einer eventuellen Ausdehnung der Artikel durch Erwärmung o.ä. eine Beschädigung der Verpackungseinheit, insbesondere der Artikel und/oder der Umreifung zu verhindern, ist es erforderlich, dass die Umreifung eine gewisse Dehnbarkeit und/oder Elastizität ausweist.

Diese Dehnbarkeit und/oder Elastizität wird durch die gezielte Ausrichtung der Papierfasern des Verpackungsmaterials erreicht.

Das Verfahren zur Herstellung einer Verpackungseinheit umfassend eine Zusammenstellung von mindestens zwei Artikel, welche durch mindestens eine bandförmige Umreifung zusammengefasst werden, sieht vor, dass bei der Herstellung des Umreifungsbands die Ausrichtung der Papierfasern in dem Verpackungsmaterial berücksichtigt werden, so dass insbesondere in dem Umreifungsband ein Anteil von mindestens 80 % der in einem Winkel zwischen ca. 75° und 105° senkrecht zu Längserstreckungsrichtung des Umreifungsbandes angeordnet ist.

Der Vorteil der gezielten Ausrichtung der Papierfasern besteht darin, dass Faserwerkstoffe durch die Faserrichtung anisotrope Werkstoffe bilden. Insbesondere weisen sie in Faserlängsrichtung eine höhere Steifigkeit auf als senkrecht zur Faserrichtung. Diese Eigenschaft wird hier ausgenutzt, um eine gewünschte Steifigkeit in Kombination mit einer ebenfalls gewünschten Dehnbarkeit zu erhalten. Durch die Anordnung der Mehrheit der Papierfasern in einem Winkel zwischen 75 und 105% zur Längserstreckungsrichtung der Umreifung entstehen für die Umreifung besonders geeignete Materialeigenschaften.

Insbesondere ist die maximale Zugfestigkeit noch ausreichend, um stabile Verpackungseinheiten herzustellen. Gleichzeitig weist das Umreifungsband ein ausreichendes Dehnungsvermögen auf, um bei einer eventuellen Ausdehnung der in der Verpackungseinheit zusammengefassten Artikel sich ebenfalls entsprechend auszudehnen.

Insbesondere weisen aus einem reinen Papiermaterial gebildete Umreifungsbänder bei entsprechender Orientierung der Papierfasern für die Verwendung als Umreifung deutlich verbesserte Materialeigenschaften gegenüber aus einem reinen Papiermaterial gebildeten Umreifungsbändern mit einer willkürlichen Ausrichtung der Papierfasern auf, insbesondere eine erhöhte Stabilität aufgrund einer erhöhten Dehnbarkeit. Das ermöglicht einen vorteilhaften Einsatz, der auf die Verwendung eines Verpackungsmaterials, welches Kunststoffanteile oder andere Materialmodifikationen aufweist, verzichten kann.

Bekannterweise erfolgt bei einer Erwärmung der Flaschen, beispielsweise beim Transport zum Endverbraucher, eine Flaschendehnung von bis zu 5% ihres ursprünglichen Volumens. Vorzugsweise sollte das verwendete Umreifungsband diese Flaschenausdehnung erlauben, ohne dass eine Beschädigung der Verpackungseinheit, der Flaschen und/oder der Umreifung stattfindet.

Versuche mit unterschiedlichen Materialien haben Folgendes ergeben: Liegen die Papierfasern beispielsweise in einer im Wesentlichen parallelen Ausrichtung zur Längserstreckungsrichtung eines als Umreifung verwendeten Papierstreifens, dann kann eine Ausdehnung um 5% nur unter Ausreißen des Papierstreifens erzielt werden. Dagegen kann eine Ausdehnung von circa 5% und sogar mehr bei Verwendung eines Papierstreifens erzielt werden, bei welchem die Papierfasern in einer im Wesentlichen orthogonalen Ausrichtung zur Längserstreckungsrichtung des Papierstreifens angeordnet sind. Ein solcher Papierstreifen ist somit geeignet, auch nach Ausdehnung der Flaschen einen weiteren stabilen Zusammenhalt der Flaschen in der Verpackungseinheit zu gewährleisten.

Das Verpackungsmaterial für die Umreifungsbänder kann beispielsweise auf Rollen bereitgestellt werden, wobei das Verpackungsmaterial auf den Rollen eine Orientierung von mindestens 80% der Papierfasern quer zur Faserrichtung aufweist. Nach dem Ablängen der entsprechenden Abschnitte, welche Abschnitte als Umreifungsbänder verwendet werden, weisen diese eine Mehrheit an Papierfasern in der gewünschten orthogonalen Orientierung auf.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine beispielhafte Verpackungseinheit, wie sie im Zusammenhang mit der vorliegenden Erfindung verwendet werden kann.
Fig. 2A zeigt eine Ausführungsform eines Umreifungsbandes mit Papierfasern, welche im Wesentlichen parallel zur Längserstreckungsrichtung des Umreifungsbandes orientiert sind.
Fig. 2B zeigt eine Ausführungsform eines Umreifungsbandes mit Papierfasern, welche im Wesentlichen orthogonal zur Längserstreckungsrichtung des Umreifungsbandes orientiert sind.
Fig. 2C zeigt die Ausdehnung von Umreifungsbändern gemäß Figuren 2A und 2B.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

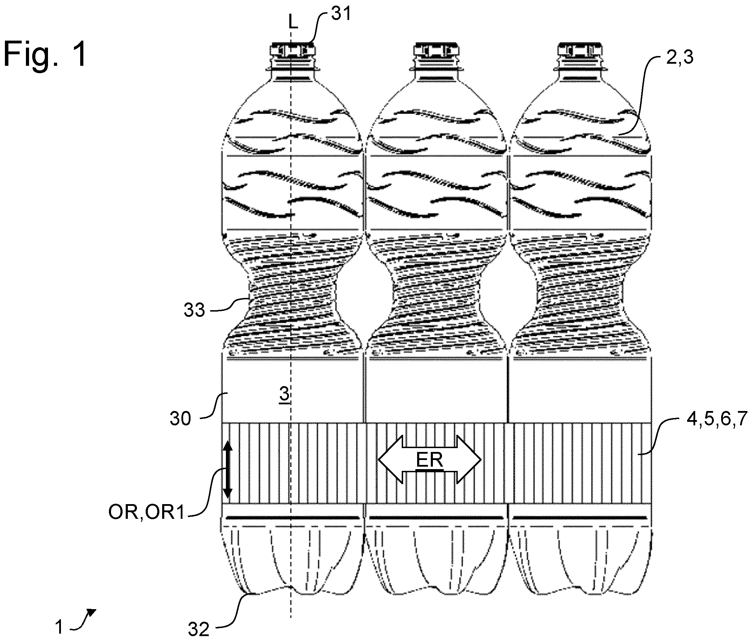

Die schematische Seitenansicht der Fig. 1 zeigt eine Verpackungseinheit 1, welche sechs Artikel 2 in Form von Flaschen 3 umfasst. Die Flaschen 3 weisen einen Flaschenkörper 30, einen Deckelbereich 31 und einen Flaschenboden 32 auf. Zwischen dem Deckelbereich 31 und dem Flaschenboden 32 erstreckt sich eine Längsachse L der Flaschen 3. Weiterhin können die Flaschen 3 im Bereich des Flaschenkörpers 30 einen verjüngten Querschnittsbereich aufweisen, der insbesondere als Griffmulde 33 dienen kann.

Die Flaschen 3 sind in der Verpackungseinheit 1 in zwei Parallelreihen angeordnet und werden von einer bandförmigen Umreifung zusammengefasst, welche nachfolgend als Umreifungsband 4 bezeichnet wird. D.h. es handelt sich hierbei um ein sog. 3x2Gebinde in Rechteckanordnung.

Gemäß einer nicht dargestellten Ausführungsform kann das Umreifungsband 4 im Bereich der Griffmulde 33 angeordnet werden, wobei eine solchen Anordnung besonders vorteilhaft ist, da hierbei ein axiales Verrutschen des Umreifungsbandes 4 durch den ober- und unterhalb der Griffmulde 22 verbreiterten Flaschenquerschnitt zusätzlich verhindert wird.

Das Umreifungsband 4 besteht aus einem Verpackungsmaterial 5, welches Papierfasern 6 umfasst. Vorzugsweise wird das Umreifungsband 4 aus einem reinen Papiermaterial 7 gebildet.

Das Umreifungsband 4 weist eine durch den Doppelpfeil ER markierte Längserstreckungsrichtung auf. Wie in Fig. 1 deutlich zu erkennen ist, erstreckt sich die Längserstreckungsrichtung ER des an den Flaschen 3 angeordneten Umreifungsbandes 4 senkrecht zu der Längsachse L der Flaschen 3.

Die in dem Umreifungsband 4 enthaltenen Papierfasern 6 weisen eine bevorzugte Orientierung OR auf. Insbesondere ist ein Anteil von mindestens 80 % der in dem Umreifungsband 4 enthaltenen Papierfasern 6 in einem Winkel zwischen ca. 75° und 105° zur Längserstreckungsrichtung ER des Umreifungsbands 4 angeordnet.

Besonders bevorzugt sind im Wesentlichen alle Papierfasern 6 des Umreifungsbands 4 parallel zueinander und orthogonal zur Längserstreckungsrichtung ER des Umreifungsbands 4 angeordnet. Diese orthogonale Orientierung wird nachfolgend mit dem Bezugszeichen OR1 bezeichnet. Dadurch ergibt sich insbesondere, dass die Papierfasern 6 des Umreifungsbands 4 insbesondere parallel zu den Längsachsen L der Flaschen 3 ausgerichtet sind.

Zur Herstellung der Verpackungseinheit 1 wird das Umreifungsband 4 vorzugsweise unter Aufbringen einer Vorspannung um die Außenseiten der Flaschen 3 gespannt und an seinen Enden verbunden. Werden die Verpackungseinheiten 10 beispielsweise beim Transport erwärmt, kann es zu einer Ausdehnung der Flaschen 3 kommen. Das Umreifungsband 4 kann diese Ausdehnung in einem gewissen Maße kompensieren, insbesondere ist das Umreifungsband 4 in einem gewissen Masse elastisch und/oder dehnbar, um eine Beschädigung der Verpackungseinheit 1 zu verhindern, insbesondere der Flaschen 3 und/oder des Umreifungsbands 4. Diese Dehnbarkeit und/oder Elastizität des Umreifungsbandes 4 wird durch die gezielte Ausrichtung der Papierfasern 6 des Verpackungsmaterials 5 erreicht.

Insbesondere wird bei der Herstellung des Umreifungsbandes 4, welches nachfolgend zur Herstellung von Verpackungseinheiten 1 verwendet wird, die Ausrichtung der Papierfasern 6 in dem Verpackungsmaterial 5 berücksichtigt. Vorzugsweise wird das Umreifungsband 4 derart aus einem geeigneten Verpackungsmaterial 5 herausgeschnitten, dass ein Anteil von mindestens 80 % der Papierfaserns in einem Winkel zwischen ca. 75° und 105° senkrecht zu Längserstreckungsrichtung ER des Umreifungsbandes 4 angeordnet ist.

Der Vorteil der gezielten Ausrichtung der Papierfasern 6 besteht darin, dass Faserwerkstoffe durch die Faserrichtung anisotrope Werkstoffe bilden. Insbesondere weisen sie in Faserlängsrichtung eine höhere Steifigkeit auf als senkrecht zur Faserrichtung. Diese Eigenschaft wird hier ausgenutzt, um eine gewünschte Steifigkeit des Umreifungsbands 4 in Kombination mit einer ebenfalls gewünschten Dehnbarkeit zu erhalten. Durch die gezielte Anordnung der Papierfasern 6 erhält das Umreifungsband 4 besonders geeignete Materialeigenschaften. Insbesondere ist die maximale Zugfestigkeit noch ausreichend, um stabile Verpackungseinheiten 1 herzustellen. Gleichzeitig weist das Umreifungsband 4 ein ausreichendes Dehnungsvermögen auf, um bei einer eventuellen Ausdehnung der in der Verpackungseinheit 1 zusammengefassten Flaschen 3 ebenfalls eine entsprechende Ausdehnung vorzunehmen.

Ein wesentlicher Vorteil von aus einem reinen Papiermaterial 7 bestehenden Umreifungsbändern 4 besteht im Umweltaspekt, da auf die Verwendung eines Verpackungsmaterials 5, welches Kunststoffanteile oder andere Materialmodifikationen aufweist, verzichtet werden kann. Reine Papierbänder können wesentlich einfacher entsorgt und/oder recycelt werden.

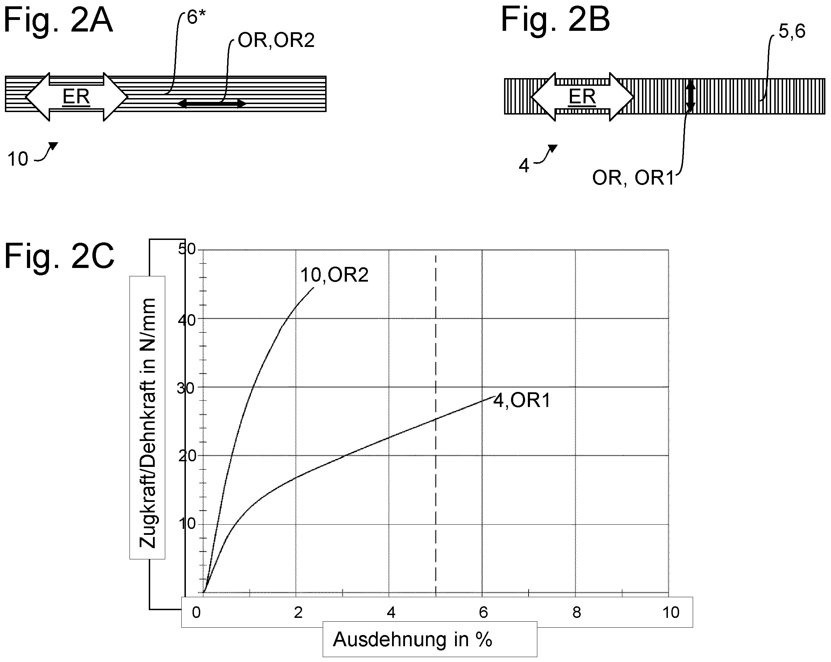

Die schematische Darstellung der Fig. 2A zeigt eine Ausführungsform eines Umreifungsbands 10 mit Papierfasern 6*, welche im Wesentlichen parallel zur Längserstreckungsrichtung ER des Umreifungsbandes 10 orientiert sind und eine sogenannte parallele Orientierung OR2 aufweisen.

Die schematische Darstellung der Fig. 2B zeigt eine Ausführungsform eines Umreifungsbands 4 mit Papierfasern 6, welche im Wesentlichen orthogonal zur Längserstreckungsrichtung ER des Umreifungsbandes 4 orientiert sind und eine sogenannte orthogonale Orientierung OR1 aufweisen.

Das Diagramm der Fig. 2C zeigt graphisch die Ausdehnung eines Umreifungsbands 10 gemäß Fig. 2A mit Papierfasern 6*, welche im Wesentlichen eine zweite Orientierung OR2 parallel zur Längserstreckungsrichtung ER des Umreifungsbandes aufweisen und weiterhin die Ausdehnung eines Umreifungsbands 4 gemäß Fig. 2B mit Papierfasern 6, welche im Wesentlichen eine erste Orientierung OR1 orthogonal zur Längserstreckungsrichtung ER des Umreifungsbandes 4 aufweisen.

Insbesondere zeigt der in Fig. 2C dargestellte Graph ein Kraft-DehnungsDiagramm. Auf der X-Achse wird die Ausdehnung des jeweiligen Umreifungsbandes 10, 4 in % gegenüber der Ausgangslänge des jeweiligen Umreifungsbandes 10, 4 dargestellt. Auf der Y-Achse wird die verwendete Zugkraft oder Dehnkraft pro Fläche in N pro mm² dargestellt. Man kann in den Graphen deutlich erkennen, dass das Umreifungsband 4 gemäß Fig. 2B eine erhöhte Dehnbarkeit gegenüber dem Umreifungsband 10 aufweist.

Bekannterweise erfolgt bei einer Erwärmung von Flaschen 3 (vergleiche Fig. 1), beispielsweise beim Transport zum Endverbraucher, eine Flaschendehnung von bis zu 5%. Vorzugsweise sollte das verwendete Umreifungsband diese Flaschenausdehnung erlauben, ohne dabei selbst beschädigt zu werden oder zu einer Beschädigung der Flaschen 3 zu führen. Aus dem Graph ist ersichtlich, dass bei einer Zugkraft oder Dehnkraft von 40 Newton pro mm² Fläche die Ausdehnung des Umreifungsbandes 10 mit Papierfasern 6* in paralleler Orientierung OR2 noch bei unter 2% liegt und somit deutlich unter der maximalen Flaschenausdehnung von 5%.

Dagegen wird eine Ausdehnung des Umreifungsbandes 4 mit Papierfasern 6 in orthogonaler Orientierung OR1 von circa 5% bereits bei einer Zugkraft oder Dehnkraft von 25 Newton pro mm² Fläche erreicht. Eine Dehnung des Umreifungsbandes 10 um 5% konnte nur unter zumindest teilweisem Reißen des Umreifungsbandes 10 erzielt werden. Dieses ist somit ungeeignet, da ein gerissenes Umreifungsband 10 keinen weiteren stabilen Zusammenhalt der Flaschen 3 in der Verpackungseinheit 1 gewährleisten kann.

Die Graphik der Fig. 2C zeigt somit deutlich, dass es vorteilhaft ist, das Umreifungsband nach seinem Dehnungsvermögen auszulegen, welches insbesondere von der Orientierung OR der Papierfasern 6 des verwendeten Verpackungsmaterials abhängt.

Das Verpackungsmaterial 5 für die Umreifungsbänder 4 (vergleiche Figuren 1 und 2B) kann beispielsweise auf Rollen bereitgestellt werden, wobei das Verpackungsmaterial 5 auf den Rollen eine Orientierung von mindestens 80% der Papierfasern 6 quer zur Rolle aufweist. Nach dem Ablängen der entsprechenden Abschnitte, welche Abschnitte als Umreifungsbänder 4 verwendet werden, weisen diese derart hergestellten Umreifungsbänder 4 eine Mehrheit an Papierfasern 6 in der gewünschten orthogonalen Orientierung OR1 auf.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verpackungseinheit
- 2: Artikel
- 3: Flaschen
- 4: Umreifungsband
- 5: Verpackungsmaterial
- 6,6*: Papierfasern
- 7: reines Papiermaterial
- 10: Umreifungsband
- 30: Flaschenkörper
- 31: Deckelbereich
- 32: Flaschenboden
- 33: Griffmulde

- ER: Längserstreckungsrichtung
- L: Längsachse
- OR: Orientierung
- OR1: orthogonale Orientierung
- OR2: parallele Orientierung

## Patentansprüche

1. Verpackungseinheit (1) umfassend eine Zusammenstellung von mindestens zwei Artikeln (2), welche mindestens zwei Artikel (2) vermittels mindestens einer bandförmigen Umreifung (4) aus einem Verpackungsmaterial (5) umfassend Papierfasern (6) zusammengefasst sind, wobei die Umreifung (4) eine Längserstreckungsrichtung (ER) aufweist, welche Längserstreckungsrichtung (ER) einer Ausrichtung der Umreifung (4) senkrecht zu einer Längsachse (L) der Artikel (2) entspricht, **dadurch gekennzeichnet, dass** ein Anteil von mindestens 80% der in der Umreifung (4) enthaltenen Papierfasern (6) in einem Winkel zwischen ca. 75° und 105° zur Längserstreckungsrichtung (ER) angeordnet ist wobei die Umreifung (4) zumindest teilweise elastisch oder dehnbar ausgebildet ist.

2. Verpackungseinheit (1) nach Anspruch 1, wobei ein Anteil von mindestens 80% der in der Umreifung (4) enthaltenen Papierfasern (6) in einer orthogonalen Anordnung (OR1) zur Längserstreckungsrichtung (ER) der Umreifung (4) angeordnet ist, insbesondere wobei im Wesentlichen alle Papierfasern (6) in einer orthogonalen Anordnung (OR1) zur Längserstreckungsrichtung (ER) der Umreifung (4) angeordnet sind.

3. Verpackungseinheit (1) nach Anspruch 1 oder 2, wobei die Umreifung (4) unter Spannung zumindest bereichsweise an Außenmantelflächen der Artikel (2) anliegt.

4. Verpackungseinheit (1) nach einem der voranstehenden Ansprüche, wobei die Umreifung (4) aus einem reinen Papierfasermaterial besteht.

5. Verfahren zur Herstellung einer Verpackungseinheit (1) umfassend eine Zusammenstellung von mindestens zwei Artikeln (3), welche vermittels einer bandförmige Umreifung zusammengefasst sind,
wobei die Umreifung (4) eine Längserstreckungsrichtung (ER) aufweist, welche Längserstreckungsrichtung (ER) einer Ausrichtung der Umreifung (4) senkrecht zu einer Längsachse (L) der Artikel (2) entspricht
**dadurch gekennzeichnet, dass** die Umreifung (4) aus einem Verpackungsmaterial (5) umfassend Papierfasern (6) hergestellt wird,
wobei bei der Herstellung des Umreifungsbands die Ausrichtung der Papierfasern (6) in dem Verpackungsmaterial (5) berücksichtigt wird,
wobei die Umreifung (4) derart aus dem Verpackungsmaterial (5) hergestellt wird, dass ein Anteil von mindestens 80% der in der Umreifung (4) enthaltenen Papierfasern (6) in einem Winkel zwischen ca. 75° und 105° senkrecht zu Längserstreckungsrichtung (ER) angeordnet ist, wobei die Umreifung (4) zumindest teilweise elastisch oder dehnbar ausgebildet ist.

6. Verfahren nach Anspruch 5, wobei die Umreifung (4) derart aus dem Verpackungsmaterial (5) hergestellt wird, dass ein Anteil von mindestens 80% der in der Umreifung (4) enthaltenen Papierfasern (6) in einer orthogonalen Anordnung (OR1) zur Längserstreckungsrichtung (ER) ausgerichtet ist, insbesondere wobei im Wesentlichen alle Papierfasern (6) in einer orthogonalen Anordnung (OR1) zur Längserstreckungsrichtung (ER) der Umreifung (4) ausgerichtet sind.

7. Verfahren nach einem der Ansprüche 5 oder 6, wobei die Umreifung aus einem reinen Papierfasermaterial gebildet wird.

## Claims

1. A packaging unit (1) comprising an assembly of at least two articles (2), which at least two articles (2) are gathered together by means of at least one ribbon-like strapping (4) of a packaging material (5) comprising paper fibres (6), wherein the strapping (4) has a longitudinal extension direction (ER), which longitudinal extension direction (ER) corresponds to an orientation of the strapping (4) perpendicular to a longitudinal axis (L) of the articles (2), **characterised in that** a proportion of at least 80% of the paper fibres (6) contained in the strapping (4) is arranged at an angle of between approximately 75° and 105° relative to the longitudinal extension direction (ER), wherein the strapping (4) is designed to be at least partially elastic or stretchable.

2. The packaging unit (1) according to claim 1, wherein a proportion of at least 80% of the paper fibres (6) contained in the strapping (4) is arranged in an orthogonal arrangement (OR1) relative to the longitudinal extension direction (ER) of the strapping (4), in particular, wherein substantially all paper fibres (6) are arranged in an orthogonal arrangement (OR1) relative to the longitudinal extension direction (ER) of the strapping (4).

3. The packaging unit (1) according to claim 1 or 2, wherein the strapping (4) is in contact under tension at least with some areas of the outer body surfaces of the articles (2).

4. The packaging unit (1) according to one of the previous claims, wherein the strapping (4) consists of a pure paper fibre material.

5. A method for the production of a packaging unit (1), comprising an assembly of at least two articles (3), which are gathered together by means of a ribbon-like strapping,
wherein the strapping (4) has a longitudinal extension direction (ER), which longitudinal extension direction (ER) corresponds to an orientation of the strapping (4) perpendicular to a longitudinal axis (L) of the articles (2),
**characterised in that** the strapping (4) is produced from a packaging material (5) comprising paper fibres (6),
wherein the orientation of the paper fibres (6) in the packaging material (5) is taken into account in the production of the strapping ribbon,
wherein the strapping (4) is produced from the packaging material (5) in such a manner that a proportion of at least 80% of the paper fibres (6) contained in the strapping (4) is arranged at an angle of between approximately 75° and 105° perpendicular to the longitudinal extension direction (ER), wherein the strapping (4) is designed to be at least partially elastic or stretchable.

6. The method according to claim 5, wherein the strapping (4) is produced from the packaging material (5) in such a manner that a proportion of at least 80% of the paper fibres (6) contained in the strapping (4) is oriented in an orthogonal arrangement (OR1) relative to the longitudinal extension direction (ER) of the strapping (4), in particular, wherein substantially all paper fibres (6) are oriented in an orthogonal arrangement (OR1) relative to the longitudinal extension direction (ER) of the strapping (4).

7. The method according to one of the claims 5 or 6, where the strapping is formed from a pure paper fibre material.

## Revendications

1. Unité d'emballage (1) comprenant un ensemble d'au moins deux articles (2), lesquels au moins deux articles (2) sont réunis au moyen d'au moins un cerclage en forme de bande (4) constitué d'un matériau d'emballage (5) comprenant des fibres de papier (6), dans laquelle ledit cerclage (4) présente une direction d'extension longitudinale (ER), laquelle direction d'extension longitudinale (ER) correspond à une orientation du cerclage (4) perpendiculaire à un axe longitudinal (L) des articles (2), **caractérisée par le fait qu'**une proportion d'au moins 80 % des fibres de papier (6) contenues dans le cerclage (4) est disposée selon un angle compris entre environ 75° et 105° par rapport à la direction d'extension longitudinale (ER), dans laquelle le cerclage (4) est réalisé au moins en partie de manière élastique ou extensible.

2. Unité d'emballage (1) selon la revendication 1, dans laquelle une proportion d'au moins 80 % des fibres de papier (6) contenues dans le cerclage (4) est disposée selon une disposition orthogonale (OR1) par rapport à la direction d'extension longitudinale (ER) du cerclage (4), en particulier dans laquelle pour l'essentiel toutes les fibres de papier (6) sont disposées selon une disposition orthogonale (OR1) par rapport à la direction d'extension longitudinale (ER) du cerclage (4).

3. Unité d'emballage (1) selon la revendication 1 ou 2, dans laquelle le cerclage (4) s'applique sous tension au moins par zones contre des surfaces latérales extérieures des articles (2).

4. Unité d'emballage (1) selon l'une quelconque des revendications précédentes, dans laquelle le cerclage (4) est constitué d'un matériau pur à fibres de papier.

5. Procédé de réalisation d'une unité d'emballage (1) comprenant un ensemble d'au moins deux articles (3) qui sont réunis au moyen d'un cerclage en forme de bande,
dans lequel le cerclage (4) présente une direction d'extension longitudinale (ER), laquelle direction d'extension longitudinale (ER) correspond à une orientation du cerclage (4) perpendiculaire à un axe longitudinal (L) des articles (2),
**caractérisé par le fait que** le cerclage (4) est réalisé à partir d'un matériau d'emballage (5) comprenant des fibres de papier (6),
dans lequel l'orientation des fibres de papier (6) dans le matériau d'emballage (5) est prise en compte lors de la fabrication de la bande de cerclage,
dans lequel le cerclage (4) est fabriqué à partir du matériau d'emballage (5) de telle sorte qu'une proportion d'au moins 80 % des fibres de papier (6) contenues dans le cerclage (4) est disposée selon un angle compris entre environ 75° et 105° perpendiculairement à la direction d'extension longitudinale (ER), dans lequel le cerclage (4) est réalisé au moins en partie de manière élastique ou extensible.

6. Procédé selon la revendication 5, dans lequel le cerclage (4) est réalisé à partir du matériau d'emballage (5) de telle sorte qu'une proportion d'au moins 80 % des fibres de papier (6) contenues dans le cerclage (4) est orientée dans une disposition orthogonale (OR1) par rapport à la direction d'extension longitudinale (ER), en particulier dans lequel pour l'essentiel toutes les fibres de papier (6) sont orientées dans une disposition orthogonale (OR1) par rapport à la direction d'extension longitudinale (ER) du cerclage (4).

7. Procédé selon l'une quelconque des revendications 5 ou 6, dans lequel le cerclage est constitué d'un matériau pur à fibres de papier.
